# FASCICULE DE BREVET EUROPEEN

(11) **EP 0 970 021 B1**
(45) Date de publication et mention de la délivrance du brevet: **16.03.2005**
(21) Numéro de dépôt: 99900980.6
(22) Date de dépôt: 22.01.1999
(51) Int. Cl.: C03B 5/235, C03B 5/225

(54) **PROCEDE ET DISPOSITIF DE FUSION ET D'AFFINAGE DE MATIERES VITRIFIABLES**
VERFAHREN UND VORRICHTUNG ZUM SCHMELZEN UND LÄUTERN VON GLASARTIGEM MATERIAL
METHOD AND DEVICE FOR MELTING AND REFINING MATERIALS CAPABLE OF BEING VITRIFIED

(30) Priorité: 26.01.1998 FR 9800806
(43) Date de publication de la demande: 12.01.2000
(60) Demande divisionnaire: 05100110.5
(73) Titulaire: SAINT-GOBAIN GLASS FRANCE, 92400 Courbevoie (FR)
(72) Inventeur: JEANVOINE, Pierre, F-78300 Poissy (FR); MASSART, Tanguy, F-40380 Poyanne (FR); RODRIGUEZ CUARTAS, Ramon, E-33401 Aviles (ES); RODRIGUEZ RODRIGUEZ, Armando, E-33400 Aviles (ES); NUNEZ HERNANDEZ, Juan-Andrés, E-33400 Salinas (ES)
(74) Mandataire: Renous Chan, Véronique
(86) Numéro de dépôt international: PCT/FR1999/000123
(87) Numéro de publication internationale: WO 1999/037591

(56) Documents cités:
- EP-A- 0 317 551
- DD-A- 160 186
- DE-C- 19 710 351
- FR-A- 2 150 878
- US-A- 3 261 677
- US-A- 3 606 825
- US-A- 3 764 287
- US-A- 3 938 981
- US-A- 4 545 800
- M.I.KOZ'MIN ET AL.: "An experimental furnace with gas combustion in the melt and thin-layer fining" GLASS AND CERAMICS., vol. 31, no. 9/10, 1975, pages 623-625, XP002099792 NEW YORK US

## Description

L'invention concerne un procédé de fusion de matières vitrifiables comprenant des éléments combustibles liquides et/ou solides en vue d'alimenter en verre fondu en continu des installations de formage du verre.

Sont plus particulièrement visées les installations de formage de verre plat comme les installations float ou de laminage, mais aussi les installations de formage de verre creux du type bouteille, flacon, de fibres de verre du type laine minérale d'isolation thermique ou phonique ou encore de fils de verre textile dits de renforcement.

Beaucoup de travaux de recherche ont porté sur ces procédés comportant schématiquement une première étape de fusion, suivie d'un affinage destiné à conditionner thermiquement et chimiquement le verre fondu, à en supprimer les infondus, les bulles, toute cause de défauts apparaissant après formage.

Dans le domaine de la fusion, on a ainsi cherché, par exemple, à accélérer la fusion, ou à en améliorer le rendement énergétique. On peut ainsi citer le procédé consistant à échauffer rapidement, de manière homogène et contrôlée les matières vitrifiables, en opérant un intense brassage mécanique permettant de mettre intimement en contact les matières vitrifiables encore solides avec la phase déjà liquide. Ce procédé est notamment détaillé dans les brevets FR-2 423 452, FR-2 281 902, FR-2 340 911, FR-2 551 746, et utilise généralement des moyens de chauffage électriques du type électrodes immergées.

Un autre type de procédé de fusion a été développé, par exemple du type de ceux décrits dans les brevets US-3 627 504, US-3 260 587 ou US-4 539 034, consistant à utiliser comme moyens de chauffage des brûleurs immergés, c'est-à-dire des brûleurs alimentés en gaz et en air, généralement disposés de manière à affleurer au niveau de la sole de façon à ce que la flamme se développe au sein même de la masse des matières vitrifiables en cours de liquéfaction.

Dans un cas comme dans l'autre, si l'on parvient effectivement à diminuer très significativement le temps de séjour des matières vitrifiables dans la chambre de fusion, à augmenter considérablement le rendement de production par rapport à des fusions " classiques ", en revanche, le verre en fusion se présente sous forme d'une mousse qu'il est délicat d'affiner : il est notamment difficile de garantir la même qualité au verre final, notamment optique.

Des recherches ont également été faites dans le domaine de l'affinage. Ainsi, il est par exemple connu du brevet FR-2 132 028 un procédé d'affinage par centrifugation à l'aide d'un dispositif dont les parois internes délimitent une chambre cylindrique d'axe vertical et que l'on met en rotation. Le verre en fusion alimente le dispositif en partie supérieure, et se répartit dans la chambre en définissant une cavité paraboloïdale s'établissant naturellement sous l'effet de la force centrifuge.

Le document Science in the glass industry, vol 31, n° 9/10, 1975, pages 623-625, enseigne un procédé et un dispositif de fusion et d'affinage de matières vitrifiables utilisant des brûleurs immergés et un compartiment d'affinage statique sous forme d'une hauteur de verre d'au plus 0,15 m.

Le US 3938981 enseigne un dispositif d'affinage du verre par centrifugation développant une différence de pression dans le verre forçant les inclusions gazeuses à migrer vers les plus faibles pressions puis à l'atmosphère hors du verre.

Le US 3606825 enseigne un dispositif comprenant des cellules à brûleurs immergés alimentés en combustible gazeux et en comburant pouvant être l'oxygène pur, suivi d'un bassin d'affinage.

Le US 4545800 enseigne un four de fusion du verre à brûleurs immergés alimentant une station de formage du verre par l'intermédiaire d'un canal dans lequel le verre est de préférence au repos de façon à permettre aux bulles de s'échapper.

Le FR 2150878 enseigne un procédé pour décharger du verre fondu affiné à partir d'une masse en rotation et déposer le verre fondu affiné sur une surface fixe de façon à réduire à un minimum la création d'inclusions gazeuses dans le verre déposé.

L'invention a alors pour but l'amélioration de procédés de fusion et éventuellement d'affinage, visant notamment à utiliser des installations plus compactes et/ou à être plus souples de fonctionnement, et/ou de plus grand rendement de production, et/ou à fabriquer du verre jusque-là difficile à fondre ou à affiner et/ou de plus faible coût énergétique, etc..., sans que ces avantages industriels soient obtenus au détriment de la qualité du verre produit.

L'invention a pour objet un procédé de fusion de matières vitrifiables qui se caractérise par la combinaison de deux caractéristiques :
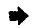 d'une part, tout ou partie de l'énergie thermique nécessaire à la fusion des matières vitrifiables est apportée par la combustion de combustible(s) fossile(s) avec au moins un gaz comburant, lesdits combustibles/gaz ou les produits gazeux issus de la combustion étant injectés sous le niveau de la masse des matières vitrifiables,
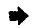 d'autre part, les matières vitrifiables comprennent des matières premières et/ou du calcin et/ou des déchets vitrifiables ainsi que des éléments combustibles liquides et/ou solides.

Après fusion, on peut éventuellement procéder à un affinage au moins en partie sous forme de « couche mince ».

On comprend par affinage "en couche mince" un affinage où l'on contraint les matières vitrifiables en fusion à s'écouler sur une profondeur/épaisseur très faible, pour fixer les idées de par exemple au plus 15 cm et même au plus 10 cm, et cela par différents moyens. On peut notamment contraindre les matières en fusion à s'écouler entre deux parois matérielles rapprochées, la distance les séparant définissant la profondeur/épaisseur de la couche mince (l'écoulement s'obtenant par la force centrifuge ou par simple gravité, par exemple). On peut aussi obtenir ces caractéristiques de couche mince par d'autres moyens, notamment par le choix des dimensions du ou des compartiments d'affinage, du choix des moyens pour les alimenter en entrée ou de les soutirer en sortie. Certains de ces moyens seront détaillés par la suite. En fait, l'intérêt majeur d'imposer ainsi une faible épaisseur au courant des matières vitrifiables en cours d'affinage est que l'on parvient ainsi à réduire considérablement le trajet des bulles contenues dans ces matières en fusion vers la surface libre de celles-ci ou vers les parois qu'elles sont contraintes de longer, et que l'on facilite l'éclatement et l'évacuation de ces bulles.

Dans l'invention, on peut utiliser un affinage très particulier, en changeant en outre un paramètre de taille, à savoir qu'au lieu d'alimenter la zone d'affinage en verre fondu " classique " à affiner, on l'alimente ici en fait en un verre obtenu par fusion par brûleurs immergés, c'est-à-dire en verre aux caractéristiques tout-à-fait particulières en ce sens qu'il est globalement mousseux, avec une densité relativement faible par rapport à celle d'un verre standard à affiner. On parvient à affiner correctement en couche mince un verre relativement mousseux au départ.

Le verre mousseux issu d'une fusion par brûleurs immergés présente la caractéristique de contenir des bulles de relativement grande dimension : si le verre en sortie de chambre de fusion selon l'invention est effectivement sous forme d'une sorte de mousse qu'il reste à affiner, on peut contrôler la taille des bulles qu'il contient, et notamment supprimer, dans certaines configurations préférées et pour certaines compositions de matières vitrifiables, quasiment toutes les bulles les plus petites, c'est-à-dire de diamètre d'environ moins de 100 µm et même moins de 200 µm, en effectuant sur ce verre lors de sa fusion une sorte de " micro-affinage " préalable au véritable affinage suivant la fusion, micro-affinage facilitant la coalescence des bulles, la disparition des plus petites bulles au profit des plus grosses et favorisé par l'ajout dans les matières vitrifiables d'agents d'aide à l'affinage du type coke ou sulfates. En outre, ce verre en sortie de chambre de fusion a généralement un taux résiduel d'infondus relativement faible : la conjonction de " grosses " bulles et de peu d'infondus autorise ainsi l'utilisation d'un affinage en couche mince, en facilitant grandement l'affinage dont au moins une partie se trouve avoir déjà été réalisée de facto lors de la fusion. Des bulles " grosses " présentent une vitesse d'ascension plus grande, coalescent plus vite, en final s'évacuent plus vite.

A noter également que, généralement, le verre issu d'une fusion par brûleurs immergés ne contient que peu de sulfate, dont le taux résiduel avant affinage peut descendre jusqu'à moins de 600 ppm, notamment moins de 200 ou 100 ppm, voire moins de 50 ppm en poids exprimé en SO₃, quel que soit le type de matières vitrifiables pouvant contenir ou non des sulfates de manière involontaire, voire en ajoutant volontairement des sulfates. Cela s'expliquerait par la pression partielle d'eau générée par la combustion immergée.

A noter qu'un verre désulfaté donne moins de problèmes de composés volatils dans le bain float, moins de risque de formation de sulfure d'étain et donc en final moins de risque de défaut d'étain sur la feuille de verre. Cela diminue la quantité de sulfures (voire la supprime totalement) dans le cas de verres réduits, notamment des sulfures de fer donnant des couleurs résiduelles jaunes/ambres peu souhaitées ou des inclusions de sulfure de nickel, qui peuvent provoquer la casse du verre lors de traitements thermiques du type trempe.

L'invention permet ainsi éventuellement d'avoir des verres très pauvres en sulfate ayant même l'opération éventuelle d'affinage, donc des verres au moins aussi pauvres après éventuel affinage, et ceci sans avoir à purifier/sélectionner des matières vitrifiables pour qu'elles aient peu de sulfate. Au contraire, on peut même ajouter du sulfate au départ.

Un effet avantageux obtenu par la combinaison selon l'invention, concerne le coût énergétique du procédé : la fusion par brûleurs immergés permet de ne pas avoir recours à la fusion électrique du type électrodes immergés, dont le coût peut être très significatif suivant les pays. En outre, et c'est le point le plus important, la fusion par brûleurs immergés crée un brassage convectif au sein des matières vitrifiables en cours de liquéfaction, comme détaillé par la suite. Ce mélange très fort entre matières non encore liquéfiées et celles qui sont déjà en fusion est extrêmement efficace, et permet d'obtenir une fusion, à matières vitrifiables de composition chimique identique, à température moins élevée et/ou beaucoup plus rapide qu'avec des moyens de chauffage traditionnels.

Les températures rencontrées dans la fusion peuvent être globalement moins élevées que dans des procédés usuels, ce qui est très intéressant économiquement, simplement en terme de coût énergétique, mais également par le choix des matériaux du type réfractaires entrant dans la fabrication des installations : moins chauds, ils se corrodent moins vite.

Les temps de séjour dans la zone de fusion et dans celle de l'affinage éventuel sont significativement réduits et compatibles, ce qui est évidemment très positif sur le rendement de production, sur la tirée de l'installation dans son ensemble. Parallèlement, l'invention permet d'obtenir des installations très compactes : en effet, la fusion par brûleurs immergés, toujours grâce au brassage très fort qu'elle provoque, permet de réduire considérablement la taille de la chambre de fusion. Et l'affinage en couche mince a les mêmes conséquences sur la taille du ou des compartiments où s'effectue cette opération. En diminuant ainsi la profondeur de verre lors de l'affinage, on évacue plus vite les bulles et on peut donc réduire considérablement la " longueur " (dans le sens d'écoulement du verre) du ou des compartiments d'affinage. Globalement, l'installation peut donc être très compacte, avec des gains clairs en termes de coût de construction, de simplification de fonctionnement, de réduction de l'usure des matériaux de construction,

En ce qui concerne l'opération de fusion, le comburant choisi peut être selon l'invention à base d'air, d'air enrichi en oxygène ou même substantiellement à base d'oxygène. Une forte concentration en oxygène dans le comburant est en effet avantageux pour différentes raisons : on diminue ainsi le volume des fumées de combustion, ce qui est favorable sur le plan énergétique et ce qui évite tout risque d'une fluidisation excessive des matières vitrifiables pouvant provoquer des projections sur les superstructures, voûtes de la chambre de fusion. En outre, " les flammes " obtenues sont plus courtes, plus émissives, ce qui permet un transfert plus rapide de leur énergie vers les matières vitrifiables, et accessoirement de diminuer si on le souhaite la profondeur du " bain " de matières vitrifiables en cours de liquéfaction. On parle ici de " flammes ", mais ce ne sont pas forcément des flammes au sens habituel du terme. On peut parler plus généralement, comme dans la suite du texte, de " combustions ". En outre, toute éventuelle émission de gaz NOx polluant est ainsi réduite au minimum.

En ce qui concerne le choix du combustible, celui-ci peut être du type combustible fossile gazeux ou non tel que du gaz naturel, le propane, du fioul ou tout autre combustible hydrocarboné. Il peut aussi s'agir d'hydrogène. Le procédé de fusion par brûleurs immergés selon l'invention est alors un moyen avantageux d'utiliser de l'hydrogène, par ailleurs difficilement utilisable avec des brûleurs " aériens ", non immergés, étant donné le caractère peu émissif des flammes obtenues par la combustion entre H₂ et O₂.

Combiner dans une fusion par brûleurs immergés l'utilisation d'un comburant oxygène et celle d'un combustible hydrogène est un bon moyen d'assurer un transfert thermique efficace de l'énergie des brûleurs au verre en fusion, conduisant par ailleurs à un procédé totalement " propre ", c'est-à-dire sans émission d'oxyde d'azote NOₓ, ni de gaz à effet de serre du type CO₂ autre que celui pouvant provenir de la décarbonatation des matières premières.

Avantageusement, la fusion s'effectue selon l'invention dans au moins une chambre de fusion que l'on équipe de brûleurs disposés de façon à ce que leur combustion ou gaz de combustion se développent dans la masse des matières vitrifiables en cours de fusion. On peut ainsi les faire traverser ses parois latérales, la sole et/ou les suspendre par le dessus, en les accrochant à la voûte ou à toute superstructure appropriée. Ces brûleurs peuvent être tels que leurs conduits d'amenée des gaz affleurent la paroi qu'ils traversent. Il peut être préférable que ces conduits " entrent " au moins en partie dans la masse des matières vitrifiables, de manière à éviter que les flammes ne soient à trop grande proximité des parois et n'entraînent des usures prématurées des matériaux réfractaires. On peut aussi choisir de n'injecter que les gaz de combustion, les combustions étant réalisées hors de la chambre de fusion à proprement dite.

Comme évoqué plus haut, il s'est avéré que ce mode de chauffage provoquait par convection un brassage intense des matières vitrifiables : des boucles de convection se forment ainsi de part et d'autre des combustions ou " flammes " ou courants de gaz de combustion, mêlant en permanence matières fondues et non encore fondues de manière très efficace. On retrouve ainsi les caractéristiques très favorables d'une fusion " agitée ", sans avoir recours à des moyens d'agitation mécaniques peu fiables et/ou susceptibles d'usure rapide.

De préférence, on règle la hauteur de la masse des matières vitrifiables dans la chambre de fusion ainsi que celle sur laquelle se développent les combustions ou gaz issus de la combustion pour que ces combustions/gaz restent dans la masse desdites matières vitrifiables : le but est de laisser s'établir ainsi les boucles de circulation convective dans la matière en cours de liquéfaction.

De manière générale, ce type de fusion permet de réduire considérablement l'émission de tout type de poussières au niveau de la chambre de fusion, et de gaz type NOx car les échanges thermiques se font très vite, évitant les pics de températures susceptibles de favoriser la formation de ces gaz. Il réduit également considérablement l'émission des gaz de type CO₂, la consommation énergétique totale de l'installation étant plus faible qu'avec des dispositifs conventionnels utilisant des fours à flammes fonctionnant en inversion par exemple.

On peut optionnellement prévoir de faire précéder la fusion par une étape de préchauffage des matières vitrifiables, à une température cependant nettement inférieure à celle nécessaire pour les liquéfier, par exemple à au plus 900°C. Pour réaliser ce préchauffage, on peut avantageusement récupérer l'énergie thermique des fumées. En les épuisant ainsi thermiquement, on peut globalement diminuer la consommation énergétique spécifique de l'installation.

Les matières vitrifiables peuvent comprendre des matières premières, mais aussi du calcin, voire des déchets destinés à être vitrifiés. Elles peuvent comprendre également des éléments combustibles (organiques) : on peut ainsi recycler, par exemple, des fibres minérales ensimées, avec liant (du type de celles utilisées dans l'isolation thermique ou acoustique ou de celles utilisées dans le renforcement de matière plastique), des vitrages feuilletés avec des feuilles de polymère du type polyvinylbutyral tels que des parebrises, ou tout type de matériau " composite " associant du verre et des matériaux plastiques tels que certaines bouteilles. On peut aussi recycler des " composites verre-métal ou composés métalliques " tels que vitrages fonctionnalisés avec des revêtements contenant des métaux, jusque-là difficiles à recycler car cela risquait d'entraîner un enrichissement progressif de la chambre de fusion en métaux s'accumulant à la surface de la sole. Mais le brassage imposé par la fusion selon l'invention permet d'éviter cette sédimentation, et ainsi de recycler, par exemple, des vitrages revêtus de couches d'émail, de couches de métal et/ou de différents éléments de connectique.

L'invention a aussi pour objet le recyclage de tous ces éléments composites contenant du verre grâce à la fusion par brûleurs immergés dans un four verrier. On peut notamment prévoir des fours à brûleurs immergés dont la fonction essentielle est la fabrication d'un calcin à partir de ces matériaux divers à recycler, calcin particulier pouvant ensuite servir comme matières premières, associé ou non à du calcin standard, pour des fours verriers traditionnels.

Avantageusement, on peut prévoir d'introduire tout ou partie des matières vitrifiables dans la chambre de fusion sous le niveau de la masse des matières vitrifiables en cours de fusion. On peut introduire une partie de ces matières de façon habituelle au-dessus de la masse en cours de liquéfaction, et le reste en-dessous, par exemple par des moyens d'amenée du type vis sans fin. On peut ainsi introduire les matières directement dans la masse en cours de liquéfaction, en un seul point ou en différents points répartis dans les parois de la chambre de fusion. Une telle introduction directement dans la masse de matières en cours de liquéfaction (ci-après désignée par " bain de verre ") est avantageuse à plus d'un titre : d'abord, elle diminue considérablement tous les risques d'envol des matières premières au-dessus du bain de verre, donc réduit au minimum le taux de poussières solides émises par le four. Ensuite, elle permet de mieux contrôler le temps de séjour minimal desdites matières avant extraction vers l'éventuelle zone d'affinage, et de les introduire sélectivement là où le brassage convectif est le plus fort, selon la disposition des brûleurs immergés. Ce ou ces points d'introduction dans le bain de verre peut (peuvent) ainsi se trouver à proximité de la surface, ou plus profondément dans le bain de verre, par exemple à une hauteur de bain de verre comprise entre 1 /5^{ème} et 4/5^{ème} de la profondeur totale du bain de verre à partir du niveau de la sole, ou encore entre 1 /3 et 2/3 de ladite profondeur.

On a vu que le procédé selon l'invention permettait de recycler des matériaux plastiques, sous forme de produits composites associés avec du verre tout particulièrement, ces plastiques servant ainsi pour partie de combustible. Il est également possible, et avantageux, d'introduire tout ou partie du combustible nécessaire à la fusion par brûleurs immergés sous forme de combustible solide (matériaux organiques de type polymère, charbon) ou même de combustible liquide, ce combustible venant se substituer en partie au moins aux combustibles (notamment fossiles) liquides ou gazeux alimentant les brûleurs. De manière générale, le terme de " matières vitrifiables " ou " matières premières utilisé dans le présent texte vise à englober les matières nécessaires à l'obtention d'une matrice vitreuse (ou céramique ou vitrocéramique), mais également tous les additifs (additifs d'affinage ...), tous les combustibles liquides ou solides éventuels (plastique de matériau composite ou non, matières organiques, charbons, ...), et tout type de calcin.

On peut aussi recycler des vitrages feuilletés avec des feuilles de polymère de type polyvinylbutyral, tels que des parebrises équipant les véhicules, ou d'autres types de matériaux composites associant du verre et des matériaux plastiques tels que certaines bouteilles par exemple.

On peut aussi recycler des vitrages fonctionnalisés avec des revêtements contenant des métaux, jusque-là difficiles à recycler car cela risquait d'entraîner un enrichissement progressif de la chambre de fusion en métaux s'accumulant à la surface de la sole. Mais le brassage imposé par la fusion selon l'invention permet d'éviter cette sédimentation, et ainsi de recycler, par exemple, des vitrages revêtus de couches d'émail, de couche de métal, de différents éléments de connectique.

Le procédé selon l'invention peut fonctionner avec un taux de calcin élevé.

Comme mentionné plus haut, l'affinage éventuel est donc opéré sur des matières vitrifiables en fusion du type verre à l'état relativement mousseux. Typiquement, cette " mousse " une masse volumique d'environ 0,5 à 2 g/cm³, notamment 1 à 2 g/cm³ par exemple (à comparer à une masse volumique de l'ordre de 2,3 ou 2,4 g/cm³ pour du verre non mousseux), elle peut avoir un taux de sulfate d'au plus 600 ou même d'au plus 100 ppm exprimé en poids de SO₃ et surtout contenir une majorité de bulles de diamètre d'au moins 100 ou 200 µm.

Pour améliorer les performances de l'affinage éventuel, on ajoute de préférence aux matières vitrifiables des additifs d'aide à l'affinage divers, le but était notamment de faire disparaître du verre les bulles de diamètre inférieur à 100 et même inférieur à 200 µm dès le stade de la fusion, comme évoqué plus haut. Il peut s'agir d'additifs réducteurs, tel que le coke (qui permet aussi d'ajuster le rédox du verre). Dans ce cas, il est avantageux de sélectionner de la poudre de coke de granulométrie moyenne inférieure à 200 µm. Il peut aussi s'agir de sulfates. D'autres additifs d'aide à l'affinage seront plutôt efficaces lors du stade d'affinage à proprement parlé, après celui de la fusion. Ils permettent notamment de " déstabiliser " la mousse : il s'agit par exemple de fluor ou composé fluoré ou chloré, plus généralement d'halogénures, ou encore de nitrate du type NaNO₃ : le fluor (halogène) paraît abaisser la viscosité du verre, il permettrait ainsi de faciliter le drainage des films qui se forment entre les bulles, drainage favorisant l'effondrement de la mousse. Il abaisse aussi la tension de surface du verre.

Avantageusement, le procédé selon l'invention permet d'opérer la fusion à des températures n'excédant pas 1400°C, notamment d'au plus 1380 ou 1350°C, et l'affinage à des températures n'excédant pas 1500°C.

L'affinage éventuel, selon une première variante, peut être fait dans au moins un compartiment statique (immobile en fonctionnement) en aval de la chambre de fusion, du type canal d'écoulement, et muni de moyen(s) pour contraindre les matières vitrifiables en fusion à s'affiner en couche mince, notamment sur une profondeur d'au plus 15 cm ou d'au plus 10 cm. Ce(s) moyen(s) peuvent également avantageusement contribuer à éviter la formation d'un courant de verre de retour dans la masse des matières vitrifiables en fusion s'écoulant dans le(s)dit(s) compartiments). Le " courant de retour " se rapporte aux courroies de recirculation convective que l'on trouve au sein des matières vitrifiables dans la plupart des compartiments d'affinage conventionnels. Pour plus de détails sur un mode d'obtention non limitatif de la suppression de ce courant de retour et les avantages qui y sont liés, on se reportera avantageusement par exemple au brevet EP-616 983.

Il s'est en effet avéré qu'un très grand avantage lié à un écoulement en couche mince était que l'on pouvait supprimer tout courant de retour, en ayant dans le compartiment d'affinage un écoulement du type écoulement piston. Dans un écoulement piston, les matières en fusion n'ont plus de composante de vitesse dirigée vers le bas, les bulles tendant à monter vers la surface du verre ne peuvent plus être contraintes de " replonger " à nouveau dans le bain par un entraînement dû aux courants de recirculation convective ainsi supprimés.

Selon une seconde variante, l'affinage éventuel en couche mince est opéré soit dans la chambre de fusion même, soit dans au moins un compartiment statique situé en aval de celle-ci, en conférant aux matières vitrifiables en fusion un trajet descendant par gravité entre au moins deux parois voisines, essentiellement parallèles entre elles, au moins partiellement immergées dans la masse en fusion et inclinées par rapport au plan de la sole de la chambre ou du compartiment en fusion (ou, autrement dit, inclinées selon des plans essentiellement parallèles entre eux et inclinés par rapport à l'axe longitudinal de la chambre de fusion ou du compartiment aval en question). Avantageusement, ces parois peuvent être intégrées dans un ou plusieurs éléments structurels tel(s) que des éléments tubulaires, notamment de section approximativement rectangulaire, cloisonnés longitudinalement (par une pluralité de cloisons) : on obtient ainsi un affinage en formant une pluralité de couches minces de verre à affiner coulant le long des « lamelles » constituées par les parois mentionnées plus haut, affinage dont le mode de fonctionnement sera détaillé par la suite à l'aide des figures.

Selon une troisième variante, l'affinage éventuel est opéré en aval de la chambre de fusion, mais dans un compartiment susceptible d'être mis en rotation afin d'assurer l'affinage par centrifugation, ce compartiment étant en outre muni de moyen(s) pour contraindre les matières vitrifiables en fusion à s'affiner en couche mince sur une " épaisseur relative " R1/R0 d'au moins 0,8, ou, en valeurs absolues, sur une " épaisseur absolue" d'au plus 10 cm.

Au sens de l'invention, on comprend le rapport R1/R0 de la façon suivante : R0 est le rayon moyen de la cavité sensiblement cylindrique que délimite le compartiment et dans laquelle s'écoule la matière en fusion, R1 est le rayon moyen des moyens de cloisonnement que l'on introduit dans la cavité pour imposer aux matières en fusion un trajet entre les parois internes de la cavité et les moyens de cloisonnement.

Une troisième variante consiste à combiner les deux précédentes, notamment en utilisant pour l'affinage un premier compartiment statique, puis un second en rotation.

(Dans le cadre de l'invention, les termes " amont et " aval " se réfèrent à la direction de l'écoulement du verre dans l'installation depuis l'enfournement des matières vitrifiables dans la chambre de fusion jusqu'à l'extraction du verre affiné).

Le procédé de fusion selon l'invention permet de fabriquer des verres de compositions et de propriétés très variées. Du fait de sa faible inertie, il permet d'ailleurs de passer d'une composition à une autre avec des temps de transition très courts. Lorsqu'un affinage est effectué, il permet d'alimenter en verre fondu affiné des installations de formage de verre plat, de verre creux, de laine de verre ou de fils de verre de renforcement.

Il permet ainsi de fabriquer des verres relativement réduits, présentant notamment un rédox supérieur ou égal à 0,3. (On définit le rédox comme le rapport de la teneur en pourcentage en poids de fer ferreux FeO sur la teneur en fer total pondéral de la composition exprimée sous forme de Fe₂O₃).

Il permet également de fabriquer des verres à taux de SiO₂ élevé, par exemple d'au moins 72 ou même au moins 75% en poids, verres généralement difficiles à fondre, mais intéressants, notamment en termes de coût de matières premières, du fait qu'ils sont de faible densité, et qu'ils présentent une très bonne compatibilité avec des matériaux plastiques. Il permet aussi de fabriquer des verres assez particuliers, à fort taux d'oxyde d'alcalino-terreux, par exemple contenant au moins 18% en poids de CaO, pourtant assez corrosifs avec les procédés de fusion traditionnels à plus haute température que dans l'invention, ainsi que des verres à faible taux d'oxyde de sodium, d'au plus 11% en poids par exemple, ou à faible taux de sulfates, d'au plus 600 ppm par exemple. Des verres contenant du fer, de rédox élevé mais à teneur en sulfate faible permettent également l'obtention de verres à couleur résiduelle dans les bleus, particulièrement esthétique et recherchée dans le domaine du verre plat pour l'automobile et pour le bâtiment par exemple. On peut ainsi obtenir des verres anti-solaires très sélectifs, sur lesquels on peut déposer des couches anti-solaires pour en renforcer les performances thermiques, du type TiN par exemple, couches décrites notamment dans les brevets EP-638 527 et EP-511 901.

Pour mettre en oeuvre le procédé selon l'invention, on peut utiliser un dispositif de fusion et éventuellement d'affinage qui comporte:
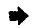 au moins une chambre de fusion équipée de brûleurs alimentés en combustibles fossile(s) du type gaz (naturel) et en comburant(s) du type air ou oxygène, lesdits brûleurs étant disposés de façon à injecter ces gaz ou les gaz issus de la combustion sous le niveau de la masse des matières vitrifiables introduite dans ladite chambre de fusion,
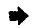 éventuellement des moyens pour contraindre les matières vitrifiables en fusion à s'affiner sous forme de " couche mince ", lesdits moyens étant compris dans la chambre de fusion même ou dans au moins un compartiment d'affinage en aval de celle-ci.

Avantageusement, comme évoqué précédemment, la chambre de fusion peut être équipée d'au moins un moyen d'introduction de matières vitrifiables sous le niveau du bain de verre, notamment au moins deux et de préférence sous forme d'ouverture(s) dans les parois associée(s) à un moyen d'amenée du type vis sans fin. On minimise ainsi les risques d'envol de poussières, tout en prévoyant éventuellement aussi une introduction au-dessus du bain de verre pour les matières vitrifiables comme la silice sur lesquelles on peut opérer une opération de préchauffage sans risque de prise en masse.

L'invention a également porté sur des améliorations de conception concernant les parois de la chambre de fusion destinées à être en contact avec le bain de verre. Plusieurs variantes sont possibles. Dans certain cas, on peut utiliser simplement des matériaux réfractaires connus à base d'oxyde comme l'alumine, la zircone, l'oxyde de chrome, les réfractaires dits AZS (alumine-zircone-silice). On préfère généralement les associer à un système de refroidissement par circulation de fluide du type eau (" water-jacket " ou refroidissement par boite à eau en français). On peut prévoir de disposer la boîte à eau côté extérieur, les réfractaires étant alors en contact direct avec le verre, ou côté intérieur. La boite à eau a alors pour fonction de créer une veine de verre plus froide à proximité de réfractaires, particulièrement sollicités dans ce contexte car le bain de verre généré par les brûleurs immergés provoque des courants convectifs forts contre les parois.

Une autre variante consiste à ne pas utiliser de réfractaires dans la zone du bain de verre, mais uniquement la boîte à eau évoquée plus haut.

Une autre variante consiste à utiliser des matériaux réfractaires, (éventuellement associés à un système de refroidissement du type boîte à eau) et à les doubler d'un garnissage en un métal hautement réfractaire tel que le molybdène (ou alliage de Mo). Ce garnissage peut avantageusement être maintenu à distance (par exemple 1 à quelques milimètres) des parois des réfractaires, et offrir au bain de verre une surface de contact continue (plaque(s) pleine(s) en Mo) ou non, (plaque(s) percée(s) d'orifices en Mo). Ce garnissage a pour but d'éviter mécaniquement une convection directe du verre sur les réfractaires, en générant une couche de verre " calme " le long des réfractaires voire en supprimant tout contact du verre avec ces derniers.

Dans la chambre de fusion, on a conçu de préférence tout ou partie des brûleurs immergés de façon à ce qu'ils puissent injecter dans le bain de verre un fluide ne participant pas à la combustion, en substitution (temporaire) au comburant et/ou au combustible. Ce fluide peut être un gaz inerte du type N₂ ou un fluide de refroidissement du type eau liquide se vaporisant immédiatement dans le bain de verre. Le fait d'arrêter ainsi la combustion temporairement tout en continuant à injecter un fluide au niveau du brûleur a généralement deux objectifs : soit on veut arrêter le fonctionnement du brûleur et plus généralement par exemple de la chambre de fusion dans son ensemble, l'injection de gaz inerte du type N₂ permettant de sécuriser la chambre au niveau des brûleurs, soit on veut changer le brûleur contre un autre alors que les autres brûleurs fonctionnent et qu'on est donc toujours en présence d'un bain de verre en fusion. Dans ce cas, comme détaillé par la suite, projeter de façon appropriée de l'eau via le brûleur permet de figer temporairement le verre au-dessus du brûleur en créant une sorte de "cloche", ce qui laisse un laps de temps suffisant pour procéder au changement sans enverrer le brûleur.

Selon la première variante évoquée plus haut, l'éventuel compartiment d'affinage est statique. Il comporte un canal d'écoulement comprenant un chenal et une voûte. Les moyens pour contraindre les matières vitrifiables en fusion à s'affiner dans le canal en couche mince, notamment sur une profondeur inférieure à 15 cm, créant ainsi un écoulement de type piston, sont d'ordre par exemple structurel et comprennent la sélection appropriée du rapport de la hauteur moyenne sur la largeur moyenne dudit canal, rapport inférieur à 1 et même inférieur à 0,5.

Ce canal peut comprendre, cumulativement ou alternativement avec les moyens précédents, des moyens pour contraindre les matières vitrifiables à s'affiner en couche mince sous forme de moyens de réglage/régulation du débit des matières à l'entrée et/ou à la sortie dudit canal, ou juste en amont de ce dernier.

Ce canal peut comprendre, cumulativement ou alternativement avec les moyens précédents, d'autres moyens pour l'obtention d'un affinage en couche mince, à écoulement piston. En fait, généralement, ces moyens consistent à prendre en compte le débit de matière dans le compartiment d'affinage et la surface développée par le bain de matières en fusion dans le compartiment de fusion, de façon à déterminer la profondeur suffisamment faible pour obtenir une couche mince à écoulement piston. Le canal peut par ailleurs être équipé de moyens de chauffage, notamment du type brûleurs conventionnels disposés au-dessus des matières vitrifiables, de préférence des brûleurs à oxygène.

Le canal peut également être muni de moyens d'homogénéisation des matières vitrifiables, du type agitateurs mécaniques par exemple.

Selon la seconde variante, la chambre de fusion ou le compartiment d'affinage en aval de celle-ci comprend au moins un moyen structurel d'affinage en couche mince sous forme d'au moins deux parois voisines sensiblement parallèles, destinées à être immergées au moins en partie dans la masse à affiner et inclinées par rapport à la sole de la chambre ou du compartiment. De préférence, ces parois sont intégrées dans un ou des éléments tubulaires décrits plus haut. Avantageusement, ceux-ci sont disposés dans la chambre de fusion même et débouchent dans l'ouverture d'évacuation aval de ladite chambre.

Selon la troisième variante, l'éventuel compartiment d'affinage comporte au moins un appareil susceptible d'être mis en rotation pour assurer l'affinage par centrifugation, les parois internes dudit appareil délimitant sensiblement la forme d'un cylindre creux vertical au moins dans sa partie médiane.

Pour contraindre les matières vitrifiables à circuler en couche mince dans cet appareil centrifugeur, on peut équiper avantageusement la cavité de ce dernier de cloison(s) sur au moins une partie de sa hauteur, venant contraindre les matières en fusion à s'écouler entre les parois internes de l'appareil et ces cloisons, la distance moyenne parois/cloisons définissant " l'épaisseur " de la couche mince. En fait, on empêche de se former le profil en forme de parabole que prend naturellement le verre en fusion quand il est centrifugé " librement ", c'est-à-dire uniquement cantonné par des parois extérieures de type cylindrique. Au contraire, on l'oblige à longer les parois de l'appareil et des cloisons que l'on a installées dans le corps du centrifugeur, sur une épaisseur relativement constante sur la hauteur du centrifugeur et bien plus faible que si on laissait s'établir le profil paraboloïdal évoqué plus haut. On gagne ainsi considérablement en efficacité, les bulles venant s'éclater sous la force centripète beaucoup plus vite sur les cloisons, le trajet des bulles étant beaucoup plus court. On peut parler d'un écoulement piston comme dans la variante statique. Cela permet de réduire la hauteur du centrifugeur, sa taille tout en gardant les mêmes performances. De préférence, la distance cloisons/parois est d'au plus quelques centimètres, ou définie par le rapport R1/R0 d'au moins 0,8, rapport explicité plus haut.

Selon une conception préférée, l'appareil est alimenté en partie supérieure en matières vitrifiables en fusion pour un moyen d'amenée statique du type canal d'écoulement. Ces moyens d'amenée peuvent comprendre au moins un compartiment mis sous pression réduite pour permettre l'alimentation de l'appareil et/ou d'opérer un premier affinage.

L'appareil peut avantageusement être muni de moyens de piégeage de particules solides de densité supérieure à celle du verre, moyens notamment localisés dans sa zone inférieure et sous forme d'encoches/de rainures pratiquées dans ses parois internes. De préférence, on sélectionne la vitesse de rotation de l'appareil entre 100 et 1500 tours par minute.

L'appareil peut également être muni de moyens mécaniques fixes ou suivant sa rotation, et aptes à cisailler la mousse et à l'entraîner du haut vers le bas, vers la zone inférieure de l'appareil d'où le verre affiné est soutiré. Ces moyens sont notamment sous forme de déflecteurs percés, d'ailettes, disposées dans la zone supérieure dudit appareil.

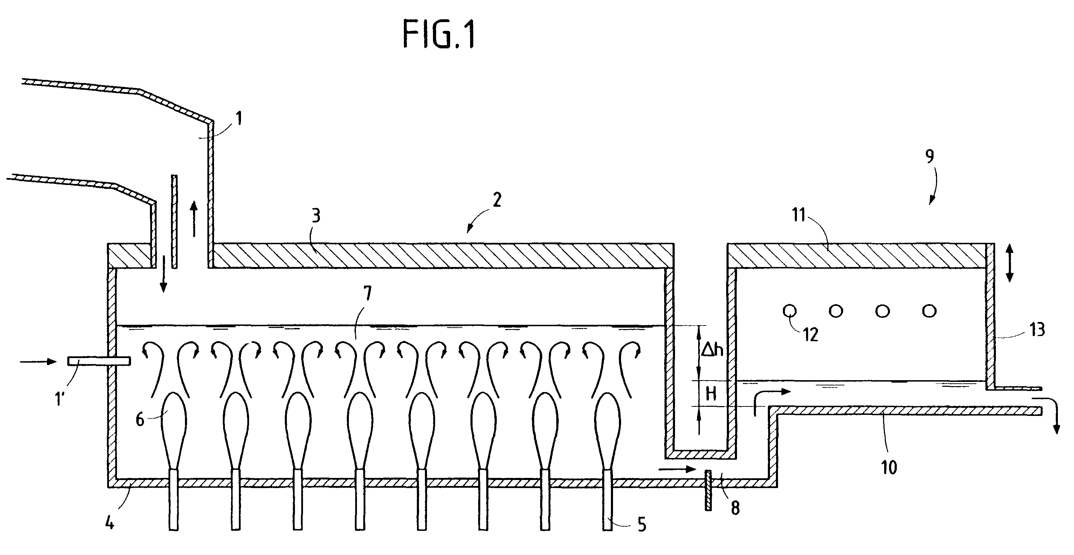

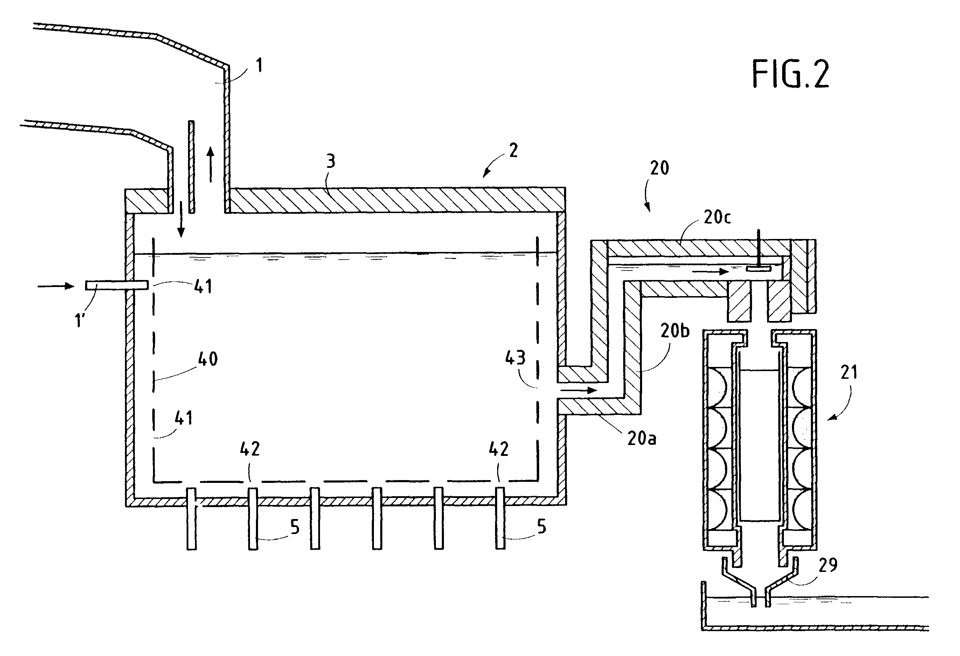

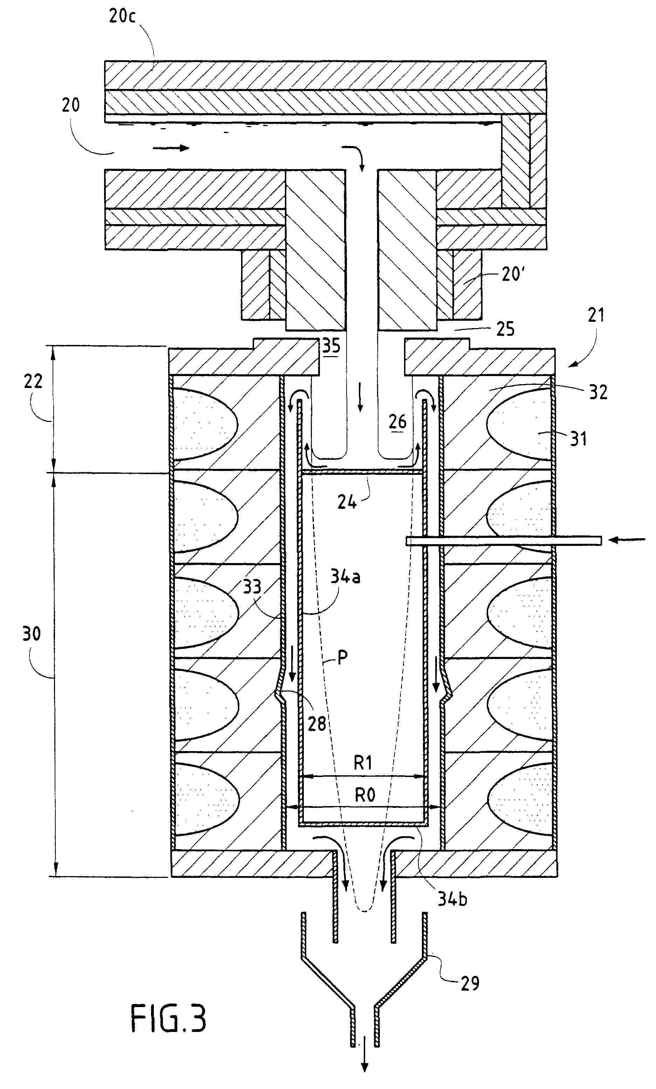

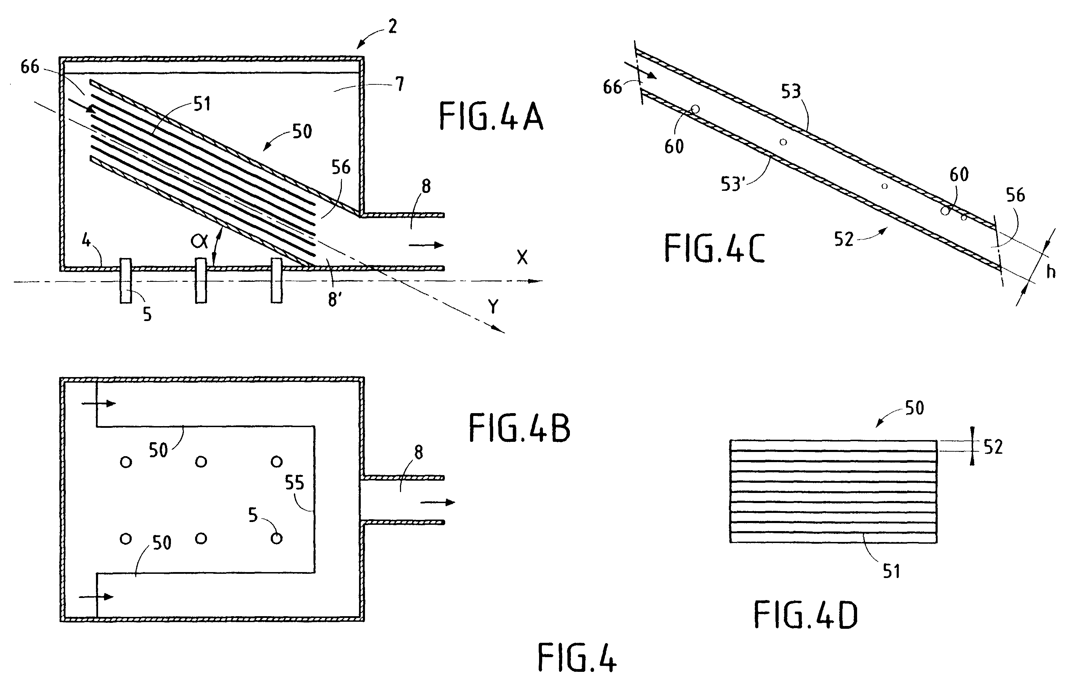

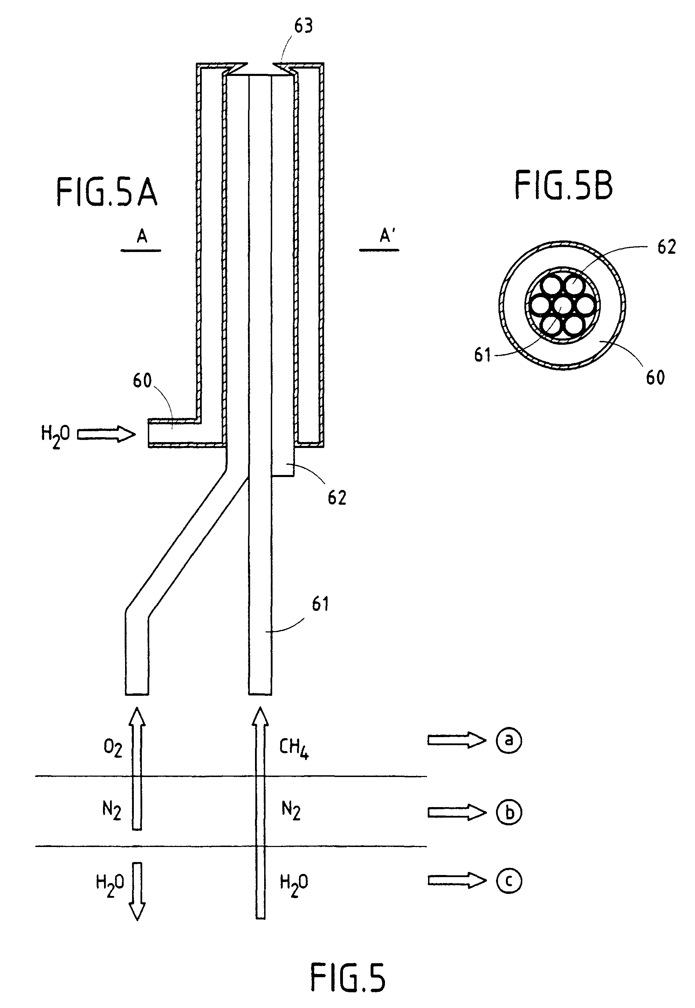

Le dispositif permettant la mise en oeuvre de l'invention sera ci-après détaillée à l'aide de trois modes de réalisation non limitatifs, illustrés par les figures suivantes :
□ figure 1 : une installation schématique de fusion/affinage utilisant un dispositif d'affinage statique,
□ figure 2 : une installation schématique de fusion/affinage utilisant un dispositif d'affinage par centrifugation.
□ figure 3 : une vue agrandie du dispositif d'affinage de l'installation selon la figure 2.
□ figure 4 : une installation schématique de fusion/affinage utilisant un affinage par lamelles dans la chambre de fusion même,
□ figure 5 : une vue schématique en coupe transversale d'un brûleur immergé équipant la chambre de fusion des installations des figures précédentes.

Ces figures ne sont pas nécessairement à l'échelle et pour plus de clarté sont extrêmement simplifiées.

Les dispositifs décrits ci-après sont adaptés pour fondre et affiner des verres de compositions très variées, ici des verres destinés à alimenter une installation float pour produire du verre plat. Mais cette application n'est pas limitative. Ces verres peuvent également alimenter notamment des outils de formage de verre creux ou des outils de fibrage du type dispositif par centrifugation interne.

Outre, bien sûr, tous les verres standards du type silico-sodo-calcique, différents types de verres spéciaux sont particulièrement intéressants à fabriquer avec les dispositifs selon l'invention, notamment ceux jugés jusque-là difficiles à fondre :
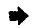 les verres à faible taux de Na₂O et relativement fort taux d'oxyde alcalino-terreux, notamment de CaO, avantageux sur le plan économique en termes de coût de matières premières, mais assez corrosifs aux températures de fusion conventionnelles et relativement durs à fondre par des procédés classiques. Il peut s'agir des compositions de verre par exemple décrites dans le brevet FR97/08261 du 1 er juillet 1997, telles que (% pondéraux) :

| | |
|---|---|
| SiO₂ | 72-74,3% |
| Al₂O₃ | 0-1,6% |
| Na₂O | 11,1-13,3% |
| K₂O | 0-1,5% |
| CaO | 7,5-10% |
| MgO | 3,5-4,5% |
| Fe₂O₃ | 0,1-1% |

ou encore de compositions du type (exprimées en pourcentages pondéraux) :

| | |
|---|---|
| SiO₂ | 66-72, notamment 68-70% |
| Al₂O₃ | 0- 2% |
| Fe₂O₃ | 0-1 % |
| CaO | 15-22% |
| MgO | 0-6, notamment 3-6% |
| Na₂O | 4-9, notamment 5-6% |
| K₂O | 0-2, notamment 0-1 % |
| SO₃ | traces |

Un exemple illustrant cette famille de compositions est le suivant :

| | |
|---|---|
| SiO₂ | 69% |
| Al₂O₃ | 1 % |
| Fe₂O₃ | 0,1% |
| CaO | 18,9% |
| MgO | 5% |
| Na₂O | 5,6% |
| K₂O | 0,3% |
| SO₃ | traces |

Ce verre présente une température inférieure de recuisson appelée également " strain point" de 590°C (température à laquelle le verre a une viscosité de 1014,5 poises). Il a aussi une température de liquidus de 1225°C, une température T(log2) de 1431°C et une température T(log3,5) de 1 140°C [T log(2) et T log(3,5) correspondent aux températures que le verre a respectivement quand il atteint en poises une viscosité de log2 ou log3,5l. Il a des propriétés de verre anti-feu résultant de son point de ramollissement élevé supérieur à 800°C et des propriétés adéquates pour une application dans les écrans plasma grâce à son " strain point " élevé.
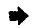 des verres à fort taux de silice, eux-aussi intéressants sur le plan économique, et avec une relativement faible densité dont le domaine de compositions, toujours exprimé en pourcentages pondéraux, est le suivant :

| | |
|---|---|
| SiO₂ | 72 à 80% |
| CaO + MgO + BaO | 0,3 à 14% |
| Na₂O | 11 à 17% |
| oxydes alcalins | 11 à 18,5% |
| Al₂O₃ | 0,2 à 2% |
| B₂O₃ | 0 à 2% |
| Fe₂O₃ | 0 à 3% |
| SO₃ | traces éventuellement |
| coke | 0 - 600 ppm |

et éventuellement des oxydes colorants oxyde de Ni, Cr, Co, ...) (Ces verres ont la particularité d'être particulièrement visqueux).

Un exemple illustrant cette famille de compositions est le suivant :

| | |
|---|---|
| SiO₂ | 76,4% |
| Fe₂O₃ | 0,1% |
| Al₂O₃ | 0,1% |
| CaO | 7,6% |
| MgO | 5% |
| Na₂O | 10% |
| K₂O | 0,3% |

Il a une densité d'environ 2,46 (à comparer aux densités de 2,52 du verre silico-sodo-calcique standard du type " Planilux " commercialisé par Saint-Gobain Vitrage).
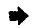 On a également vu plus haut que l'on pouvait obtenir avec le procédé selon l'invention des verres réduits, dont le fort rédox, la teneur en fer, et le faible taux de sulfate permettent l'obtention de verres de couleur résiduelle bleue.
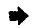 Avec le procédé selon l'invention, on peut aussi fabriquer des verres à taux nul ou quasiment nul en oxydes alcalins du type Na₂O, notamment en vue d'applications pour des vitrages anti-feu ou pour des substrats utilisés dans l'industrie électronique. On peut pour de telles compositions se reporter notamment aux brevets EP-526 272 et EP-576 362.

D'autres verres, notamment à faible taux de MgO du type de ceux décrits dans les brevets EP-688 741 et W096/00194 peuvent également être fabriqués par le procédé de l'invention.

Un premier mode de réalisation est donc représenté à la figure 1 : un canal 1 permet à la fois d'introduire les matières vitrifiables dans la chambre de fusion 2 par la voûte 3 et d'évacuer les fumées de combustion. Ces fumées vont préchauffer les matières vitrifiables, on récupère ainsi leur énergie thermique.

Les matières premières susceptibles d'être ainsi introduites au-dessus du bain 7 comportent notamment la silice, apte à se préchauffer sans prendre en masse. Le reste des matières premières est injecté en au moins un point 1' situé sous le niveau du bain de verre 7, notamment par une ouverture alimentée par une vis sans fin. On n'a représenté ici qu'un point d'injection, en outre disposé plutôt relativement en hauteur par rapport à la hauteur totale du bain de verre B, aux environs des 2/3 de cette hauteur et sur la paroi frontale de la chambre.

En fait, on peut prévoir plusieurs points d'injection dans les parois (parois frontales ou parois latérales) à cette même hauteur ou non, notamment soit dans la moitié supérieure, soit dans la moitié inférieure de cette hauteur B, par exemple entre le 1/3 et les 2/3 de cette hauteur. En fait, cette injection directement dans le bain de verre permet de diminuer fortement le taux d'envols (émissions de poussières solides) au-dessus du bain. En outre, selon sa configuration, elle permet de diriger les matières là où le brassage convectif est le plus fort et/ou d'en tenir compte pour que ces matières restent pendant au moins un laps de temps minimal dans la chambre 2, notamment avant de passer dans l'éventuelle zone d'affinage.

La sole 4 de la chambre est équipée de rangées de brûleurs 5 qui la traversent et pénètrent dans la chambre de fusion sur une hauteur réduite. Les brûleurs 5 sont de préférence munis de moyens de refroidissement non représentés, du type boite à eau. Les brûleurs 5 en fonctionnement développent des combustions dans des zones 6, créant à leur proximité des courants de convection au sein de la matière vitrifiable en cours de liquéfaction. Ce brassage convectif crée une mousse qui va transférer l'énergie thermique dans l'ensemble du bain 7. La fusion s'effectue de préférence vers 1350°C, par exemple pour un verre standard de la famille des verres silico-sodo-calciques.

Les parois de la chambre 2 qui sont en contact avec le bain de verre 7 sont ici en matériaux réfractaires refroidis, côté extérieur, par un système de refroidissement du type boite à eau (non représenté). Une variante consiste à ce que ce système de refroidissement, aux parois métalliques, se trouve contre les réfractaires mais du côté intérieur et se trouve donc en contact avec le verre fondu. Ces deux variantes permettent de ralentir l'usure des réfractaires en refroidissant superficiellement le verre à proximité des parois de réfractaires.

Le fonctionnement des brûleurs 5 a été adapté à la fusion immergée de la façon très schématiquement représentée à la figure 5. La figure 5a représente une coupe longitudinale d'un brûleur 5 et la figure 5b une coupe transversale, au niveau du plan AA' indiqué à la figure 5a de celui-ci. Le brûleur est doublé d'un système de refroidissement 60 du type boite à eau et d'un conduit 61 central autour duquel sont disposés concentriquement une pluralité de conduits 62, tous ces conduits de section cylindrique venant déboucher dans le nez du brûleur 63.

En fonctionnement normal (fonctionnement [a]), le conduit 61 est alimenté en gaz combustible du type gaz naturel (ou autre gaz combustible ou fioul), et les conduits 62 sont alimentés en comburant, ici de l'oxygène par exemple), l'interaction CH₄/O₂ créant une combustion dans le bain de verre.

En fonctionnement de sécurité (fonction [b]), c'est-à-dire quand on veut stopper la combustion au niveau du brûleur sans risque de l'enverrer complètement, on injecte via le conduit 61 et/ou via les conduits 62 de l'azote.

En fonctionnement destiné à permettre l'échange du brûleur contre un autre (fonctionnement [c]), on injecte de l'eau par le conduit 61, eau qui se vaporise instantanément dans le brûleur même ou dès la sortie du brûleur, la vapeur créant une sorte de voûte de verre refroidi au-dessus du brûleur ; on stoppe alors tout fonctionnement du brûleur et on a alors suffisamment de temps pour effectuer l'échange, avant que la " voûte " ne s'effondre. L'eau injectée est au moins partiellement recueillie dans le brûleur par les conduits 62. (on peut aussi inverser les rôles des conduits 61 et 62 dans ce mode de fonctionnement). On peut également substituer à l'eau tout autre fluide de refroidissement apte à figer ainsi le verre.

Le brûleur et ses différents modes de fonctionnement décrits plus haut sont un objet de l'invention, indépendamment de l'opération globale de fusion et d'affinage éventuel impliquée dans l'installation verrière.

Le verre mousseux fondu issu de la fusion par brûleurs immergés est ensuite soutiré en partie basse par un canal 8 muni optionnellement d'un moyen de réglage de débit du type poinçon non représenté. On peut ainsi contrôler le débit du verre mousseux entrant dans l'éventuel compartiment d'affinage statique. Ce compartiment se présente sous la forme d'un canal 9 défini par un chenal 10 et une voûte 11. Il est équipé de brûleurs à oxygène 12. Les matières vitrifiables s'écoulent dans le canal sans courant de retour, sur une hauteur H d'environ 5 à 10 cm. Cette hauteur est réglée de façon à avoir dans le canal 9 l'écoulement piston voulu, en prenant en compte les masses volumiques des matières en fusion dans la chambre de fusion 2 et dans le canal 9, ainsi que les hauteurs de bain I1 et I2 dans ces deux zones. Pour obtenir la couche mince recherchée, il est ici nécessaire de réhausser le niveau de la sole 10 du canal 9 par rapport à celui de la sole 4 de la chambre 2.

En sortie du canal 9, un barrage immergé 13 plongeant sur une profondeur réglable dans le bain de matières en fusion permet de réguler le débit en sortie ; le verre affiné se déverse en fin de canal 9 pour alimenter une installation de formage, ici l'enceinte d'un bain float par exemple. L'affinage s'opère donc sur une profondeur de verre très faible, ce qui raccourcit le trajet des bulles vers la surface, (leur vitesse d'ascension étant encore facilitée quand elles sont déjà très majoritairement d'au moins 200 µm), et les empêche par l'écoulement piston obtenu, à replonger en cours d'ascension dans le bain.

Les figures 2 et 3 représentent un second mode de réalisation.

La différence notable par rapport à la figure 1 réside dans la façon dont on protège les parois de réfractaires de la chambre 2. Ici, on a immergé dans le bain dé verre 7 une doublure en métal réfractaire constituée d'une paroi mince en molybdène 40 épousant la forme de la cavité de la chambre de fusion et maintenue à une distance de un à quelques millimètres des parois des réfractaires, au moyen de cales appropriées et/ou en étant suspendue dans le bain de verre par les parois de réfractaires situées au-dessus du bain ou par la voûte.

Cette plaque 40 est percée d'orifices, d'abord dans sa zone horizontale venant doubler la sole 4, afin de pouvoir être traversée par les brûleurs 5, ainsi que dans toutes ses autres parois, avec une répartition homogène dans les orifices : ce perçage n'empêche donc pas le contact réfractaires/verre fondu, par contre il casse mécaniquement les mouvements de convection du verre à proximité des réfractaires, et ralentit ainsi leur usure. Les orifices 41 des parois de la doublure 40, à l'exception de celles doublant la sole sont de préférence cylindriques et de dimensions variables, ceux de la paroi côté sole doivent au moins comprendre des orifices 42 d'une taille suffisante pour laisser passer les brûleurs 5. La doublure 40 doit aussi être largement percée (43) dans sa paroi doublant la paroi transversale aval de la chambre, pour que le verre puisse être évacué par le canal 20a. il en est de même pour la zone 1' d'introduction des matières premières : il y a nécessairement une complémentarité dans les ouvertures ménagées dans les parois en réfractaires et dans la doublure en molybdène.

Cette doublure en Mo (désignée sous le terme anglo-saxon de (" Mo lining ") est en elle-même une invention, particulièrement appropriée en association avec une chambre de fusion par brûleurs immergés, indépendamment de la façon dont peut s'opérer l'affinage ultérieur éventuel. (Il en est de même du refroidissement côté extérieur ou côté verre des réfractaires illustré à la figure précédente).

L'autre différence d'avec la figure 1 réside dans la façon dont le verre est soutiré de la chambre de fusion. Dans le cas de la figure 2, le verre est soutiré un peu plus " haut ", avec un conduit d'amenée 20 se décomposant en une première partie horizontale 20(a), une seconde partie verticale 20(b) et une troisième partie horizontale 20(c) alimentant l'appareil du centrifugeur 21. Une autre variante consiste à ce que le verre en fusion soit soutiré de la chambre de fusion en partie supérieure, par exemple à l'aide d'une gorge immergée comme cela est bien connu dans le domaine verrier.

La figure 3 se concentre sur la zone horizontale 20(c) du canal d'amenée du verre mousseux en fusion 20 soutiré de la chambre de fusion 2, qui alimente en verre le corps du centrifugeur 21 via un conduit 20'. Le centrifugeur 21 présente une partie supérieure 22 comprise entre le col 35 alimenté en verre à affiner et la plaque métallique 24, et une partie inférieure 30 se situant sous la plaque métallique 24. Peuvent être prévus des moyens non représentés destinés à contrôler le débit de verre entrant dans le centrifugeur.

Le verre descendant par le col 35 dans le centrifugeur est stoppé dans sa chute par la plaque métallique 24 qui, en associant avec la partie supérieure de la cloison 34 décrite ci-après crée une sorte de " panier " collecteur. Le verre sous l'effet de la force centrifuge tend à remonter dans la zone 26 puis à passer au-dessus de la cloison 34 ; il s'écoule ainsi de la zone 26 à la zone 30, sous forme d'une couche mince cantonnée par la paroi interne 33 du centrifugeur 21 d'une part, et par la cloison 34 disposée dans la cavité du centrifugeur d'autre part. La paroi interne 33 est de forme sensiblement cylindrique de rayon R0, la cloison 34 comporte une zone cylindrique 34(a) de rayon R1, fermée en partie basse dans la zone 34(b). La cloison 34 est munie de moyens de centrage non représentés, tout comme la plaque 24. En pointillés est représenté de manière schématique le profil en forme de parabole qu'aurait le verre sous l'effet centrifuge s'il n'y avait pas la cloison 34.

La cloison 34 et la plaque 24, tout au moins pour les parties complètement immergées dans le verre, peuvent avantageusement être en molybdène.

Le garnissage extérieure de la paroi interne 33 du corps du centrifugeur 21 peut être constitué de pièces réfractaires électrofondues 32 comportant un isolant thermique 31 incorporé de façon à ce que celui-ci ne soit pas écrasé par la force centrifuge. Est également prévue une encoche, rainure 28 faisant le tour de la paroi interne de la partie 30 (ou discontinue), qui permet de piéger toutes les particules solides de densité supérieure à celle du verre, du type inclusions de réfractaires. Lors de l'affinage par centrifugation, les particules solides plus denses que le verre sont projetées contre les parois et piégées dans les rainures 28 d'où elles ne peuvent plus ressortir. Les bulles par contre viennent par action centripète éclater vers l'intérieur du corps du centrifugeur contre la cloison 34. En final, on soutire dans la partie la plus basse de la partie 30 le verre affiné par un canal par une tête de réception à forme approximativement d'entonnoir 29. En condition standard de fonctionnement, il n'est pas nécessaire de prévoir des moyens de réchauffage du verre, la vitesse de rotation peut être de l'ordre de 700 tours par minute et la hauteur h du centrifugeur de par exemple 1 à 3 mètres.

Un troisième mode de réalisation est représenté à la figure 4 qui représente une chambre de fusion 2 identique à celle de la figure 1 en plus schématique et contenant un système d'affinage en multi-couches minces. Il s'agit donc ici d'opérer la fusion et un affinage dans la même chambre de fusion, le verre étant soutiré en partie basse par l'orifice d'évacuation 8' vers un canal 8 pour alimenter directement des outils de formage, notamment de fibrage de laine minérale ou de formage de bouteilles, flacons (ce système d'affinage pourrait aussi être disposé dans un compartiment aval). Le principe d'un tel affinage est le suivant : on utilise des éléments tubulaires 50 en molybdène (ou platine) dont la section rectangulaire est représentée en figure 4d . Ces tubes sont cloisonnés longitudinalement par des parois 51, ce qui forme des « lamelles » 52 de faible épaisseur ouvertes aux extrémités du tube (par exemple 5 à 30 lamelles). On immerge ces tubes 50 dans le bain des matières vitrifiables en cours de fusion (ci-après désigné par le terme de « bain de verre ») comme représenté aux figures 4a (vue en coupe longitudinale de la chambre de fusion ) et 4b (vue en élévation de ladite chambre). Les deux tubes 50 sont accolés aux parois latérales de la chambre, par exemple fixés aux parois en reposant sur des rampes de matériau réfractaire, de façon à être inclinés d'un angle α par rapport au plan de la sole 4, ou encore selon des axes Y convergeant avec l'axe longitudinal X du four dudit angle α.

Ces deux tubes 50 sont ainsi disposés car ils peuvent être facilement fixés aux parois de four et qu'ils sont à une distance significative des brûleurs. Cette configuration permet de protéger le molybdène du chauffage intense régnant à proximité des brûleurs. De même, il est préférable que ces tubes soient totalement immergés pour éviter leur oxydation à l'air, l'alternative étant sinon d'assurer une atmosphère non oxydante au-dessus du bain de verre (notamment une atmosphère de N₂). Les deux tubes 50 débouchent dans un tube collecteur 55 qui vient alimenter l'orifice d'évacuation 8 de la chambre.

L'affinage s'effectue de la façon suivante : le verre à affiner entre dans la section des tubes 50 en partie haute 53, puis s'écoule dans les lamelles 52 par un trajet descendant par simple gravité, comme représenté à la figure 4c montrant une lamelle-type 52. La vitesse du verre dans ces lamelles 52 est maximale au centre des lamelles et beaucoup plus faible au niveau des parois 53, 53' qui les cantonnent. Les bulles 60 quant à elles, par ascension, atteignant très vite la paroi supérieure 53 de la lamelle 52, se séparant ainsi du flux de verre descendant représenté par la flèche en figure 4c. Elles se dirigent, toujours, par ascension, vers l'entrée 66 du tube 50, à contrecourant du flux de verre, tandis que le verre débarrassé des bulles arrive en partie basse 56 de ladite lamelle 52 et est directement évacué via le collecteur 55 hors de la chambre de fusion.

Le système est d'autant plus efficace que la hauteur h de chaque lamelle 52 est petite et que leur surface est grande. Il est particulièrement approprié dans le cadre d'une fusion par brûleurs immergés qui tend à générer des bulles de diamètre relativement élevé, et qui peuvent donc être rapidement éliminées. On peut calculer le nombre, la hauteur, la surface active de ces lamelles en fonction de la taille des bulles à éliminer, du tirage de la chambre de fusion, de la viscosité du verre, notamment en choisissant également de façon appropriée leur longueur et angle d'inclinaison en fonction de la longueur de la chambre de fusion (ou du compartiment aval où elles sont disposées). A titre d'exemple, pour une chambre de fusion fabriquant 200 tonnes de verre par jour, pour éliminer toutes les bulles de diamètre supérieur à 250 microns, les tubes 50 peuvent être de dimensions 400x520x6550 mm³ et contenir 20 lamelles chacun, pour une longueur de four de l'ordre de 6000 mm.

Une variante de ce mode de réalisation consiste à disposer des éléments à lamelles similaires dans un compartiment aval.

Dans tous les cas d'affinage affineur statique ou centrifuge), on voit qu'on peut compacter considérablement la taille des dispositifs de fusion/affinage disponibles actuellement. On a aussi intérêt à ajouter aux matières vitrifiables des agents d'aide à l'affinage dont le rôle a été décrit plus haut, notamment du coke à faible granulométrie, du sulfate, du nitrate, du fluor ou du chlore.

(Aussi bien pour le compartiment de fusion que pour le compartiment d'affinage on peut remplacer le molybdène par le platine).

On peut utiliser avantageusement le mode de fusion par brûleurs immergés sans plus avoir du tout recours à un affinage au sens habituel du terme. Cela peut être le cas dans le domaine du fibrage, où l'on peut envisager d'alimenter les machines de fibrage par centrifugation interne directement en verre mousseux obtenu par fusion par brûleurs immergés, la centrifugation imposée par cette technique de fibrage réalisant de facto l'affinage du verre. On peut aussi envisager de flotter, laminer ou mettre en forme directement le verre mousseux issu de la fusion, en vue de fabriquer du verre-mousse utilisé comme isolant dans le domaine du bâtiment par exemple.

On peut aussi appliquer ce mode de fusion pour recycler des produits composites verre/métal ou verre/plastique, comme mentionné plus haut, soit pour produire du verre utilisable, soit pour produire du calcin pour alimenter un four verrier traditionnel, (selon, notamment, la proportion de ces produits composite par rapport au reste des matières vitrifiables plus traditionnelles).

## Revendications

1. Procédé de fusion de matières vitrifiables, ***caractérisé en ce que*** tout ou partie de l'énergie thermique nécessaire à la fusion desdites matières vitrifiables est apportée par la combustion de combustible(s) fossile(s) avec au moins un gaz comburant, le(s)dit(s) combustible/gaz ou les produits gazeux issus de la combustion étant injectés sous le niveau de la masse des matières vitrifiables (7) et ***en ce que*** les matières vitrifiables comprennent des matières premières et/ou du calcin et/ou des déchets vitrifiables ainsi que des éléments combustibles liquides et/ou solides.

2. Procédé selon la revendication 1, ***caractérisé en ce que*** les éléments combustibles sont choisis parmi le charbon, des matériaux composites verre/plastique, comme des vitrages feuilletés ou des fibres minérales ensimées, et des matériaux organiques.

3. Procédé selon la revendication 1 ou la revendication 2, ***caractérisé en ce que*** les matières vitrifiables comprennent des composites verre/métal, comme des vitrages à revêtement métallique et/ou revêtus de couches d'émail et/ou munis d'éléments de connectique.

4. Procédé selon l'une des revendications précédentes, ***caractérisé en ce que*** le comburant est à base d'air, d'air enrichi en oxygène ou d'oxygène.

5. Procédé selon l'une des revendications précédentes, ***caractérisé en ce que*** la fusion des matières vitrifiables s'effectue dans au moins une chambre de fusion (2) que l'on équipe de brûleurs (5) traversant ses parois latérales et/ou traversant la sole (4) et/ou suspendus à partir de la voûte (3) ou de superstructures de façon à ce que leurs combustions (6) ou gaz de combustion se développent dans la masse des matières vitrifiables en cours de fusion (7).

6. Procédé selon l'une des revendications précédentes, ***caractérisé en ce que*** les combustions (6) créées par la combustion de combustible fossile avec le(s) gaz comburant(s) et/ou les gaz issus de ladite combustion assurent par convection le brassage des matières vitrifiables (7).

7. Procédé selon la revendication 6 ou la revendication 7, ***caractérisé en ce qu'***on règle la hauteur de la masse des matières vitrifiables (7) dans la chambre de fusion (2) et la hauteur sur laquelle se développent les combustions (6)/gaz issus de la combustion pour que lesdits combustibles/gaz de combustion restent dans la masse desdites matières vitrifiables.

8. Procédé selon l'une des revendications précédentes, ***caractérisé en ce que*** la fusion est précédée d'une étape de préchauffage des matières vitrifiables à au plus 900°C.

9. Procédé selon l'une des revendications précédentes, ***caractérisé en ce que*** les matières vitrifiables contiennent des additifs d'aide à l'affinage, notamment des additifs réducteurs du type coke, de préférence de granulométrie moyenne inférieure à 200 µm, des sulfates ou des additifs à base de fluor ou de chlore ou de nitrates du type NaNO₃.

10. Procédé selon l'une des revendications précédentes, ***caractérisé en ce que*** la fusion s'opère à au plus 1400°C, notamment au plus 1380 ou 1350°C et l'affinage à au plus 1500°C.

11. Procédé selon l'une des revendications précédentes, ***caractérisé en ce qu'***on introduit tout ou partie des matières vitrifiables dans la chambre de fusion (2) sous le niveau de la masse des matières vitrifiables en cours de fusion.

12. Procédé selon l'une des revendications précédentes ***caractérisé en ce que*** les matières vitrifiables en fusion sont un verre se présentant sous la forme d'un mousse.

13. Procédé de fusion selon l'une des revendications précédentes, ***caractérisé en ce qu'***il est suivi par un affinage des matières vitrifiables après fusion se faisant au moins en partie sous forme de "couche mince".

14. Procédé selon la revendication 13, ***caractérisé en ce que*** l'affinage est opéré sur les matières vitrifiables en fusion du type verre à l'état mousseux, présentant notamment une masse volumique d'environ 0,5 à 2g/cm³.

15. Procédé selon la revendication 14, ***caractérisé en ce que*** l'affinage est opéré sur des matières vitrifiables en fusion du type verre à l'état mousseux, présentant une majorité de bulles d'au moins 100 ou même d'au moins 200 µm de diamètre.

16. Procédé selon la revendication 13 ou l'une des revendications 14 ou 15, ***caractérisé en ce que*** l'affinage est opéré dans au moins un compartiment statique situé en aval de la chambre de fusion (2), du type canal d'écoulement (9) et muni de moyen(s) pour contraindre les matières vitrifiables en fusion à s'affiner en couche mince, notamment sur une profondeur d'au plus 15 cm, de préférence d'au plus 10 cm, avec un écoulement de type écoulement piston.

17. Procédé selon la revendication 16, ***caractérisé en ce que*** le(s)dit(s) moyen(s) évitent la formation d'un courant de verre de retour dans la masse des matières vitrifiables en fusion s'écoulant dans le(s)dit(s) compartiments (9).

18. Procédé selon l'une des revendications 13, 14 ou 15, ***caractérisé en ce que*** l'affinage est opéré dans la chambre de fusion même (2) ou dans au moins un compartiment situé en aval de celle-ci, en imposant aux matières vitrifiables en fusion un trajet descendant par gravité entre au moins deux parois (53, 53') voisines, essentiellement parallèles entre elles, au moins partiellement immergées dans la masse des matières vitrifiables en fusion et inclinées par rapport au plan de la sole de ladite chambre de fusion ou dudit compartiment aval.

19. Procédé selon la revendication précédente, ***caractérisé en ce que*** lesdites parois sont intégrées dans au moins un tube (50) de section approximativement rectangulaire cloisonné longitudinalement.

20. Procédé selon l'une des revendications 14 ou 15, ***caractérisé en ce que*** l'affinage est opéré dans au moins un compartiment (21) situé en aval de la chambre de fusion (2) et susceptible d'être mis en rotation pour assurer un affinage par centrifugation, compartiment muni de moyen(s) pour contraindre les matières vitrifiables en fusion à s'affiner en couche mince, sur une "épaisseur" R1/R0 d'au moins 0,8 ou sur une épaisseur absolue d'au plus 10 cm.

21. Procédé de fabrication de verre plat notamment à couleur résiduelle bleue, à fonction anti-solaire, anti-feu, pour l'industrie électronique ou de fabrication de verre creux de type bouteilles, flacons ou de fabrication de laine de verre ou de fils de verre de renforcement ou de recyclage de produits composites verre/métal ou verre/plastique, comprenant un procédé de fusion de matières vitrifiables de l'une des revendications précédentes.

## Patentansprüche

1. Verfahren zum Schmelzen von Glasausgangsstoffen, **dadurch gekennzeichnet, dass** die zum Schmelzen der Glasausgangsstoffe erforderliche Wärmeenergie ganz oder teilweise durch Verbrennung von einem oder mehreren fossilen Brennstoffen mit mindestens einem Verbrennungsgas bereitgestellt wird, wobei der (die) Brennstoff/Gase oder die aus der Verbrennung stammenden gasförmigen Produkte unter den Spiegel der Masse aus Glasausgangsstoffen (7) geleitet werden, **und dass** die Glasausgangsstoffe Glasrohstoffe und/oder Glasbruch und/oder vitrifizierbare Abfälle sowie flüssige und/oder feste Brennstoffe umfassen.

2. Verfahren nach Anspruch 1, **dadurch gekennzeichnet, dass** die Brennstoffe aus Kohle, Glas/Kunststoff-Verbundmaterialien wie Verbundglasscheiben oder mit Schlichte überzogene anorganische Fasern und organischen Materialien ausgewählt werden.

3. Verfahren nach Anspruch 1 oder 2, **dadurch gekennzeichnet, dass** die Glasausgangsstoffe Glas/Metall-Verbundmaterialien wie Glasscheiben, die mit einer metallischen Beschichtung und/oder mit Emailschichten und/oder mit Anschlusselementen versehen sind, umfassen.

4. Verfahren nach einem der vorhergehenden Ansprüche, **dadurch gekennzeichnet, dass** das Verbrennungsmittel auf der Basis von Luft, mit Sauerstoff angereicherter Luft oder Sauerstoff ist.

5. Verfahren nach einem der vorhergehenden Ansprüche, **dadurch gekennzeichnet, dass** das Schmelzen der Glasausgangsstoffe in mindestens einer Schmelzkammer (2) geschieht, die mit Brennern (5) ausgerüstet ist, welche durch ihre Seitenwände und/oder die Sohle (4) hindurchgehen und/oder an der Decke (3) oder an Überbauten derart aufgehängt sind, dass ihre Verbrennungsvorgänge (6) oder Verbrennungsgase sich in die Masse aus schmelzenden Glasausgangsstoffen (7) erstrecken.

6. Verfahren nach einem der vorhergehenden Ansprüche, **dadurch gekennzeichnet, dass** die Verbrennungsvorgänge (6), die von der Verbrennung des fossilen Brennstoffs mit dem (den) Verbrennungsgas(en) verursacht werden, und/oder die aus dieser Verbrennung stammenden Gase durch Konvektion für das Durchmischen der Glasausgangsstoffe sorgen.

7. Verfahren nach Anspruch 6 oder 7, **dadurch gekennzeichnet, dass** die Höhe der Masse aus Glasausgangsstoffen (7) in der Schmelzkammer (2) und die Höhe, bis zu welcher sich die die Verbrennungsvorgänge (6)/die aus der Verbrennung stammenden Gase erstrecken, eingestellt wird, damit die Brennstoffe/Verbrennungsgase in der Masse aus Glasausgangsstoffen bleiben.

8. Verfahren nach einem der vorhergehenden Ansprüche, **dadurch gekennzeichnet, dass** dem Schmelzen eine Stufe des Vorerhitzens der Glasausgangsstoffe auf höchsten 900 °C vorhergeht.

9. Verfahren nach einem der vorhergehenden Ansprüche, **dadurch gekennzeichnet, dass** die Glasausgangsstoffe Läuterungsmittel, insbesondere Reduktionsmittel vom Typ Koks, vorzugsweise mit einer mittleren Korngröße von unter 200 µm, Sulfate oder Additive auf der Basis von Fluor, Chlor bzw. Nitraten wie NaNO₃ enthalten.

10. Verfahren nach einem der vorhergehenden Ansprüche, **dadurch gekennzeichnet, dass** das Schmelzen bei höchstens 1400 °C, insbesondere höchstens 1380 oder 1350 °C, und das Läutern bei höchstens 1500 °C erfolgt.

11. Verfahren nach einem der vorhergehenden Ansprüche, **dadurch gekennzeichnet, dass** alle Glasausgangsstoffe oder ein Teil davon unterhalb des Spiegels der Masse aus schmelzenden Glasausgangsstoffen in die Schmelzkammer (2) geleitet werden.

12. Verfahren nach einem der vorhergehenden Ansprüche, **dadurch gekennzeichnet, dass** die geschmolzenen Glasausgangsstoffe eine Glasschmelze bilden, die schaumförmig ist.

13. Schmelzverfahren nach einem der vorhergehenden Ansprüche, **dadurch gekennzeichnet, dass** auf den Schmelzvorgang die sich wenigstens teilweise in einer "dünnen Schicht" vollziehende Läuterung der Glasausgangsstoffe folgt.

14. Verfahren nach Anspruch 13, **dadurch gekennzeichnet, dass** die Läuterung mit geschmolzenen Glasausgangsstoffen vom Typ schaumförmige Glasschmelze, die insbesondere ein spezifisches Gewicht von etwa 0,5 bis 2 g/cm³ besitzt, durchgeführt wird.

15. Verfahren nach Anspruch 14, **dadurch gekennzeichnet, dass** die Läuterung mit geschmolzenen Glasausgangsstoffen vom Typ schaumförmige Glasschmelze, die überwiegend Bläschen mit einem Durchmesser von mindestens 100 µm oder auch mindestens 200 µm enthält, durchgeführt wird.

16. Verfahren nach Anspruch 13, 14 oder 15, **dadurch gekennzeichnet, dass** die Läuterung in mindestens einem statischen Abteil durchgeführt wird, das sich nach der Schmelzkammer (2) befindet und vom Typ Überlaufkanal (9) und mit einem oder mehreren Mitteln versehen ist, um die geschmolzenen Glasausgangsstoffe zu zwingen, sich in einer dünnen Schicht, insbesondere über eine Tiefe von höchstens 15 cm und vorzugsweise höchstens 10 cm, mit einer Strömung vom Typ Kolbenströmung läutern zu lassen.

17. Verfahren nach Anspruch 16, **dadurch gekennzeichnet, dass** von dem (den) Mittel(n) die Bildung eines Glasrückstroms in die Masse aus geschmolzenen Glasausgangsstoffen, die in das (die) Abteil(e) (9) fließt, verhindert wird.

18. Verfahren nach einem der Ansprüche 13, 14 oder 15, **dadurch gekennzeichnet, dass** die Läuterung in der Schmelzkammer (2) oder in mindestens einem Abteil, das nach dieser kommt, durchgeführt wird, indem den geschmolzenen Glasausgangsstoffen zwischen mindestens zwei benachbarten Wänden (53, 53'), die im Wesentlichen zueinander parallel stehen, wenigstens teilweise in die Masse aus geschmolzenen Glasausgangsstoffen eintauchen und zur Ebene der Sohle der Schmelzkammer oder des anschließenden Abteils geneigt sind, ein durch die Schwerkraft absteigender Weg aufgezwungen wird.

19. Verfahren nach einem der vorhergehenden Ansprüche, **dadurch gekennzeichnet, dass** die Wände in mindestens ein längsgeteiltes Rohr (50) mit etwa rechtwinkligem Querschnitt integriert sind.

20. Verfahren nach Anspruch 14 oder 15, **dadurch gekennzeichnet, dass** die Läuterung in mindestens einem Abteil (21) durchgeführt wird, das sich nach der Schmelzkammer (2) befindet, in Umdrehung versetzt werden kann, um eine Läuterung durch Zentrifugieren sicherzustellen, und mit einem oder mehreren Mitteln versehen ist, um die geschmolzenen Glasausgangsstoffe zu zwingen, sich in einer dünnen Schicht über eine "Dicke" R1/R0 von mindestens 0,8 oder über eine absolute Dicke von höchstens 10 cm läutern zu lassen.

21. Verfahren zur Herstellung von insbesondere eine blaue Restfärbung aufweisendem Flachglas mit feuerwiderstandsfähiger und Sonnenschutzfunktion und für die Elektronikindustrie, zur Herstellung von Hohlglas vom Typ Flaschen und Fläschchen, zur Herstellung von Glaswolle bzw. verstärkenden Glasfäden oder zum Recycling von Glas/Metall- bzw. Glas/Kunststoffverbunderzeugnissen, das ein Verfahren zum Schmelzen von Glasausgangsstoffen nach einem der vorhergehenden Ansprüche umfasst.

## Claims

1. Method of fusing vitrifiable materials, **characterised in that** all or some of the heat energy necessary for the fusion of the said vitrifiable materials is afforded by the combustion of a fossil fuel or fuels with at least one oxidising gas, the said fuel/gas or the gaseous products issuing from the combustion being injected below the level of the mass of vitrifiable materials (7) and **in that** the vitrifiable materials comprise raw materials and/or cullet and/or vitrifiable waste as well as liquid and/or solid combustible elements.

2. Method according to Claim 1, **characterised in that** the combustible elements are chosen from amongst carbon, glass/plastic composite materials, such as laminated glazing or bonded mineral fibres, and organic materials.

3. Method according to Claim 1 or Claim 2, **characterised in that** the vitrifiable materials comprise glass/metal composites, such as glazing panes with metallic cladding and/or coated with layers of enamel and/or provided with electrical connection elements.

4. Method according to one of the preceding claims, **characterised in that** the oxidant is based on air, oxygen-enriched air or oxygen.

5. Method according to one of the preceding claims, **characterised in that** the fusion of vitrifiable materials takes place in at least one fusion chamber (2) which is equipped with burners (5) passing through its side walls and/or passing through the floor (4) and/or suspended from the crown (3) or superstructures so that their combustions (6) or combustion gases develop in the mass of vitrifiable materials in the course of fusion (7).

6. Method according to one of the preceding claims, **characterised in that** the combustions (6) created by the combustion of fossil fuel with the oxidising gas or gases and/or the gases issuing from the said combustion provide by convection the stirring of the vitrifiable materials (7).

7. Method according to Claim 6 or Claim 7, **characterised in that** the height of the mass of vitrifiable materials (7) in the fusion chamber (2) and the height over which the combustions (6)/gases issuing from the combustion develop so that the fuels/combustion gases remain in the mass of the said vitrifiable materials.

8. Method according to one of the preceding claims, **characterised in that** the fusion is preceded by a step of preheating the vitrifiable materials to more than 900°C.

9. Method according to one of the preceding claims, **characterised in that** the vitrifiable materials contain refinement-aid additives, in particular reducing additives of the coke type, preferably with a mean granulometry of less than 200 µm, sulphates or additives based on fluorine or chlorine or nitrates of the NaNO₃ type.

10. Method according to one of the preceding claims, **characterised in that** the fusion takes place at no more than 1400°C, in particular no more than 1380° or 1350°C, and the refining at no more than 1500°C.

11. Method according to one of the preceding claims, **characterised in that** all or some of the vitrifiable materials are introduced into the fusion chamber (2) below the level of the mass of vitrifiable materials in the course of fusion.

12. Method according to one of the preceding claims, **characterised in that** the molten vitrifiable materials are a glass in the form of a foam.

13. Fusion method according to one of the preceding claims, **characterised in that** it is followed by a refining of the vitrifiable materials after fusion taking place at least partly in the form of a "thin layer".

14. Method according to Claim 13, **characterised in that** the refining is effected on the molten vitrifiable materials of the glass type in the foam state, having in particular a density of around 0.5 to 2 g/cm³.

15. Method according to Claim 14, **characterised in that** the refining is effected on molten vitrifiable materials of the glass type in the foam state, having a majority of bubbles with a diameter of at least 100 or even at least 200 µm.

16. Method according to Claim 13 or one of Claims 14 or 15, **characterised in that** the refining is effected in at least one static compartment situated downstream of the fusion chamber (2), of the flow channel (9) type and provided with means for making the molten vitrifiable materials refine in a thin layer, in particular over a depth of no more than 15 cm, preferably no more than 10 cm, with a flow of the piston flow type.

17. Method according to Claim 16, **characterised in that** the said means prevent the formation of a stream of return glass in the mass of molten vitrifiable materials flowing in the said compartment or compartments (9).

18. Method according to one of Claims 13, 14 or 15, **characterised in that** the refining is effected in the fusion chamber itself (2) or in at least one compartment situated downstream thereof, imposing on the molten vitrifiable materials a path descending by gravity between at least two adjoining walls (53, 53'), essentially parallel to each other, at least partially immersed in the mass of molten vitrifiable materials and inclined with respect to the plane of the floor of the said fusion chamber or of the said downstream compartment.

19. Method according to the preceding claim, **characterised in that** the said walls are integrated in at least one tube (50) with an essentially rectangular cross-section partitioned longitudinally.

20. Method according to one of Claims 14 or 15, **characterised in that** the refining is effected in at least one compartment (21) situated downstream of the fusion chamber (2) and able to be put in rotation in order to provide refining by centrifugation, a compartment provided with means for making the molten vitrifiable materials refine in a thin layer, over a "thickness" R1/R0 of at least 0.8 or over an absolute thickness of no more than 10 cm.

21. Method of manufacturing flat glass, in particular with a blue residual colour, with antisolar and fire-resisting function, for the electronics industry, or for manufacturing hollow glass of the bottle or flask type or for manufacturing glass wool or glass reinforcement fibres or for recycling glass/metal or glass/plastic composite products, comprising a method of fusing vitrifiable materials of one of the preceding claims.
